# EUROPÄISCHE PATENTSCHRIFT

(11) **EP 1 275 088 B1**
(45) Veröffentlichungstag und Bekanntmachung des Hinweises auf die Patenterteilung: **03.10.2007**
(21) Anmeldenummer: 00912320.9
(22) Anmeldetag: 03.04.2000
(51) Int. Cl.: G07F 7/08, H04M 17/00

(54) **VERFAHREN UND SYSTEM ZUM AUF- ODER NACHLADEN VON IN MOBILFUNKGERÄTEN EINGEFÜHRTEN CHIPKARTEN MIT EINEM GELDBETRAGSWERT**
METHOD AND SYSTEM FOR CHARGING OR RECHARGING CHIP CARDS THAT HAVE BEEN INSERTED INTO MOBILE RADIO DEVICES WITH A SUM OF MONEY
PROCEDE ET SYSTEME POUR CHARGER OU RECHARGER DES CARTES A PUCE INSEREES DANS DES APPAREILS DE RADIOTELEPHONIE MOBILE AVEC UNE SOMME D'ARGENT

(43) Veröffentlichungstag der Anmeldung: 15.01.2003
(60) Teilanmeldung: 07111298.1
(73) Patentinhaber: Swisscom Mobile AG, 3050 Bern (CH)
(72) Erfinder: MARTSCHITSCH, Andreas, CH-3360 Herzogenbuchsee (CH); RITTER, Rudolf, CH-3052 Zollikofen (CH)
(74) Vertreter: BOVARD AG
(86) Internationale Anmeldenummer: PCT/CH2000/000193
(87) Internationale Veröffentlichungsnummer: WO 2001/075816

(56) Entgegenhaltungen:
- EP-A- 0 827 119
- EP-A- 0 848 537
- EP-A- 0 986 275
- WO-A-00/33264
- WO-A-00/67210
- WO-A-96/38801

## Beschreibung

Die vorliegende Erfindung betrifft ein Verfahren und ein System zum Auf- oder Nachladen von in Mobilfunkgeräten eingeführten Chipkarten mit einem Guthaben für einen Geldbetragswert an einem Bezugsterminal, wobei der Geldbetragswert mit einem Gutschriftsverfahren und/oder Wertcodeverfahren über eine Zentraleinheit dem Benutzer gutgeschrieben wird. Insbesondere betrifft die vorliegende Erfindung ein Verfahren und System zum Auf- oder Nachladen von SIM-Karten von Mobilfunkgeräten.

Das Auf- oder Nachladen von im voraus bezahlten Guthaben auf Chipkarten (wie z.B. Smart-Cards oder SIM-Cards) ist allgemein bekannt. In der veröffentlichten Patentanmeldung EP 827 119 A1 wird ein Verfahren zum Aufladen oder Nachladen einer Chipkarte mit einem Geldbetragswert beschrieben. Gemäss dem in EP 827 119 A1 beschriebenen Verfahren wird der Verkaufswert einer an sehr vielen öffentlichen Verkaufsstellen verfügbaren Wertkarte auf eine bestimmte Chipkarte, insbesondere eine SIM-Karte (Subscriber Identification Modul), auf- oder nachgeladen, nachdem ein sich auf dieser Wertkarte befindender Wertcode an eine Dienstzentrale übertragen wurde. Ein alternatives Verfahren zum Aufladen von Telefonkarten für Mobilfunktelefone mit einer Wertkarte wird in der Patentanmeldung EP 848 537 A1 beschrieben. Gemäss dem in EP 848 537 A1 beschriebenen Verfahren wird der Verkauf einer Telefonkarte, insbesondere einer SIM-Karte, in einer Kundendatenbank registriert und die vorausbezahlte Telefonkarte wird erst aktiviert, nachdem der Benutzer beim ersten abgehenden Anruf eine von ihm definierte Geheimnummer eingibt. Der Kreditbetrag wird nicht auf der Karte, sondern in einem Benutzerkonto gespeichert. Zum Wiederaufladen des Kartenkredits ruft der Benutzer eine Dienstnummer an und gibt zusätzlich zur Geheimnummer eine Kreditkartennummer oder einen Wertcode einer Wertkarte ein, worauf das Benutzerkonto mit einem nachzuladenden Betrag erhöht wird. Wertkarten mit darauf gespeicherten Wertcodes, wie sie in der veröffentlichten Patentanmeldung EP 827 119 A1 beschrieben werden, können in unzähligen Anwendungsgebieten eingesetzt werden, da die auf einer Wertkarte gespeicherten Wertcodes nicht nur zum Aufladen von Telefonkarten oder anderen Chipkarten mit einem Geldbetragswert verwendet werden können, sondern da diese Wertcodes eingelöst werden können, um Kredit für unterschiedlichste kostenpflichtige Dienstleistungen zu erhalten. Allerdings hat die Verteilung von Wertcodes mittels einer Wertkarte als Träger den Nachtell, dass die Herstellung dieser Wertkarten mit Kosten verbunden ist, die nicht auf den Kunden übertragen werden können, da die Wertkarten sonst ihre Attraktivität bei den Kunden vedieren würden. Zusätzlich zu den Herstellungskosten ist auch der Vertrieb dieser Wertkerten fortwährend mit Kosten verbunden, da die Betreiber von öffentlich zugänglichen Verkaufsstellen diese Wertkarten nicht ohne Gewinnmarge verkaufen wollen. Typischerweise gehen diese Herstellungs- und Vertriebskosten zu Lasten des Dienstanbieters, beispielsweise der Betreiber eines Telekommunikationsnetzes. Die Kunden erwarten, dass sie die dem Geldbetragswert der Wertkarte entsprechende Dienstleistung erhalten. Es sollte erwähnt werden, dass die wegwerfbaren Wertkarten zudem unnötig die Umwelt belasten. Schliesslich sind auch Sicherheitsüberlegungen wichtig. Wertcodekarten wie auch Chipkarten mit einem vorausbezahlten Guthaben werden normalerweise in grösseren Mengen hergestellt, transportiert und durch irgendeine Endverkaufsstelle an die Kunden verkauft. Dabei kann der Schutz der Karten und Wertcodes vor betrügerischen Kopieren oder Diebstahl sehr aufwendig sein. Diesen Mangel versucht man damit zu umgehen, dass z.B. die Wertcodes oder Authorisationscodes zusätzlich geschützt werden, indem man sie mit speziellen Verpackungen, Abreiboberflächen etc. abdeckt. Trotzdem bliebt das Risiko eines Betrugs oder Diebstahls gerade an Endverkaufsstellen mit grösseren Lagerbeständen bestehen. Als weiterer Stand der Technik kann EP 0986275 A1 angeführt werden. EP 0986275 A1 zeigt ein Verfahren, bei welchem ein von einem Benutzer vorgängig bezahlter Geldbetragswert von einer Validationsplattform mittels einer Kurzmeldung auf die SIM-Karte des Mobilfunkgerätes des Benutzers übertragen wird. Der auf der SIM-Karte gespeicherte Geldbetragswert kann vom Benutzer dazu verwendet werden, kostenpflichtige Produkte oder Dienstleistungen eines Anbleters über das Mobilfunknetz mittels Kurzmeldungen zu bestellen. Um die Sicherheit zu erhöhen ist im Stand der Technik der Gebrauch von Verteilermaschinen anstelle von Endverkaufsstellen bekannt, wie z.B. die Patentanmeldung WO 96/38801 zeigt. Trotzdem bleibt die Sicherheit einer der Nachteile des Standes der Technik. Benutzt werden im Stand der Technik üblicherweise Automated Teller Machines (ATM) wie Bankomaten oder Point of Sales (POS) Terminals, welche die Buchung über ein Bankkonto des Benutzers, Kreditkarten oder Prepaidkarten (z.B. Smart-Cards) durchführt. Dabei muss ein Benutzer stets Wertcodes oder irgendein Identifikationscode verwenden, um damit auf ein in einer Zentraleinheit gespeichertes Guthaben zugreifen zu können. Das komplizierte Verfahren über Wertcodes ist ebenfalls ein Nachteil des Standes der Technik.

Es ist eine Aufgabe dieser Erfindung, ein neues Verfahren zum Aufladen und Nachladen von Chipkarten mit einem Geldbetragswert vorzuschlagen, welches die oben beschriebenen Nachteile nicht aufweist. Insbesondere soll das Auf- oder Nachladen ohne kompliziertes Wertcodeverfahren möglich sein und ohne die Nachteile des Standes der Technik bezüglich Sicherheit.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Auf- oder Nachladen von in Mobilfunkgeräten eingeführten Chipkarten mit einem Guthaben für einen Geldbetragswert eine Zentraleinheit das Guthaben über ein Mobilfunknetz auf die einer Rufnummer eines Benutzers des Mobilfunknetzes zugeordneten Chipkarte überträgt, wobei ein Benutzer den Geldbetragswert an einem vom Mobilfunkgerät unabhängigen Bezugsterminal bezahlt. Die Bezahlung erfolgt, indem der Benutzer einen Geldbetrag in das Bezugsterminal einwirft und/oder dem Benutzer ein Geldbetrag über eine Kreditkarte belastet wird und/oder dem Benutzer ein Geldbetrag auf einer Prepaidkarte mit abgespeichertem, vorausbezahltem Geldbetrag belastet wird und/oder dem Benutzer ein Geldbetrag auf einem zentral abgespeicherten Konto belastet wird, wobei das Bezugsterminal Bestellinformationen an die Zentraleinheit übermittelt, welche Bestellinformationen mindestens den Geldbetragswert und die Rufnummer umfassen. Der Rufnummer wird in der Zentraleinheit ein Guthaben in der Höhe des Geldbetragswerts zugeordnet und in einer Datenbank der Zentraleinheit abgespeichert. Bei den Chipkarten kann es sich z.B. um SIM-Karten (Subscriber Identification Module) oder Smart-Cards handeln. Einer der Vorteile ist, dass ein Benutzer eine Chipkarte eines Mobiltelefons direkt auf- oder nachladen kann, ohne ein kompliziertes Verfahren mit Wertcodes benutzen zu müssen. So muss mit dieser Ausführungsvariante weder das Verteilen der Wertcodekarten über einen Zwischenhandel, noch die Produktion von physikalischen Wertkarten bezahlt werden, was beides Kosten verursacht. Diese Kosten können im Normalfall nicht auf den Endabnehmer übertragen werden, sondern bleiben bei den Telekommgesellschaften hängen. Ein anderer Vorteil ist, dass der Benutzer in dieser Ausführungsvariante im Gegensatz zu Wertcodeverfahren keinen weiteren Schritt zum Auf- oder Nachladen der Chipkarte auszuführen braucht, wie z.B. die Eingabe eines Wertcodes über die Eingabeelemente des Mobilfunkgerätes und das Übermitteln eines Wertcodes an eine Zentraleinheit. Mögliche Fehlerquellen, z.B. bei der Eingabe, werden damit vermieden. Durch das Benutzen öffentlich zugänglicher Bezugsterminals ist das Auf- und Nachladen von Chipkarten während vierundzwanzig Stunden pro Tag möglich. Nachtarbeit durch eine Belegschaft an einer Verteilstelle ist damit unnötig. Zu erwähnen ist auch die höhere Sicherheit dieser Ausführungsvariante vor Missbrauch wie z.B. der Gefahr des Diebstahls von Wertcodekarten oder Prepaidkarten am Bezugsterminal.

Insbesondere werden die Ziele durch die Erfindung dadurch erreicht, dass zum Auf- oder Nachladen von in Mobilfunkgeräten eingeführten Chipkarten mit einem Guthaben für einen Geldbetragswert eine Zentraleinheit das Guthaben über ein Mobilfunknetz auf die einer Rufnummer eines Benutzers des Mobilfunknetzes zugeordneten Chipkarte überträgt, wobei ein Benutzer den Geldbetragswert an einem vom Mobilfunkgerät unabhängigen Bezugsterminal bezahlt. Die Bezahlung erfolgt, indem der Benutzer einen Geldbetrag in das Bezugsterminal einwirft und/oder dem Benutzer ein Geldbetrag über eine Kreditkarte belastet wird und/oder dem Benutzer ein Geldbetrag auf einer Prepaidkarte mit abgespeichertem, vorausbezahltem Geldbetrag belastet wird und/oder dem Benutzer ein Geldbetrag auf einem zentral abgespeicherten Konto belastet wird, wobei mindestens ein Wertcode durch Übermitteln von Bestellinformationen vom Bezugsterminal an einen Wertcodeausgeber angefordert wird. Die Bestellinformationen umfassen mindestens den Geldbetragswert. Der Wertcode wird von der Zentraleinheit generiert und in einer Datenbank des Wertcodeausgebers abgespeichert. Die Ausgabe des Wertcodes für das Guthaben an den Benutzer erfolgt über das Bezugsterminal, wobei dieser ausgegebene Wertcode in der Datenbank des Wertcodeausgebers mit dem Geldbetragswert verknüpft ist und wobei der Wertcode und die Rufnummer zum Auf- oder Nachladen der Chipkarte an die Zentraleinheit übermittelt werden. Bei den Chipkarten kann es sich z.B. um SIM-Karten (Subscriber Identification Module) oder Smart-Cards handeln. Ein Vorteil dieser Ausführungsvariante ist eine hohe Sicherheit vor Missbrauch, wie z.B. der Gefahr des Diebstahls von Wertcodekarten oder Prepaidkarten am Bezugsterminal. Ein weiterer Vorteil gegenüber der vorhergehenden Ausführungsvariante ist, dass Wertcodes anonym beim Bezugsterminal bezogen werden können und sich so dazu eignen z.B. an andere Benutzer des Mobilfunknetzes weitergegeben zu werden. Ein Vorteil ist ebenso, dass Benutzer Wertcodes direkt, ohne Zwischenhandel über das Bezugsterminal bezahlen und beziehen können, wobei keine physikalischen Wertkarten (z.B. mit Abreibflächen) produziert werden müssen, da eine Anzeige oder ein einfacher Ausdruck des Wertcodes auf Papier ausreichen. Insbesondere ist die Verteilung der Wertcodes ohne Nachtarbeit während vierundzwanzig Stunden pro Tag möglich.

In einer Ausführungsvariante sind die Bezugsterminals in Fahrscheinautomaten eines öffentlichen Verkehrsbetriebes integriert. Diese Ausführungsvariante hat den Vorteil, dass mit nur geringfügigen Anpassungen auf eine bestehende Infrastruktur zurückgegriffen werden kann. Ein anderer Vorteil ist, dass diese Fahrscheinautomaten meist bereits in genügender Anzahl und an für die Öffentlichkeit gut zugänglichen Plätzen vorhanden sind.

In einer weiteren Ausführungsvariante sind die Bezugsterminal in öffentlich zugängliche Terminals einer Telekommunikationsgesellschaft integriert. Auch hier bestehen die Vorteile wie in der vorgehenden Ausführungsvariante in der bereits bestehenden Infrastruktur, welche nur leicht modifiziert werden muss, in ihrer bereits grossen Verbreitung und ihrer einfachen Zugänglichkeit durch die Benutzer. Zur Integration des Bezugsterminals kann aber auch eine Automated Teller Machines (ATM) wie Bankomaten oder Point of Sales (POS) Terminals benutzt werden, welche die Buchung über ein Bankkonto des Benutzers, Kreditkarten oder Prepaidkarten (z.B. Smart-Cards) durchführt.

In einer weiteren Ausführungsvariante wird die Ausgabe der Wertcodes und/oder der Gutschriftsbestätigungen auf einer Druckereinheit des Bezugsterminals ausgedruckt. Die Nachteile des Standes der Technik bezüglich Sicherheit etc. beim Lagern von Wertkarten und Wertcodekarten fallen durch das Drucken von Wertcodes oder von einem Geldbetragswert zugeordneten Identifikationsnummem vor Ort beim Bezugsterminal weg.

An dieser Stelle soll festgehalten werden, dass sich die vorliegende Erfindung neben den erfindungsgemässen Verfahren auch auf ein System zur Ausführung dieser Verfahren bezieht.

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm, welches schematisch ein System für eine Ausführungsvariante mit Gutschriftverfahren zum Auf- oder Nachladen einer in einem Mobilfunkgerät eingeführten Chipkarte illustriert.
Figur 2 zeigt ein Blockdiagramm, welches schematisch ein System für eine Ausführungsvariante mit Wertcodeverfahren zum Auf- und Nachladen einer in einem Mobilfunkgerät eingeführten Chipkarte illustriert.
Figur 3 zeigt ein Flussdiagramm, welches schematisch die Schritte des Benutzermenüs eines Bezugsterminals zum Auf- oder Nachladen einer in einem Mobilfunkgerät eingeführten Chipkarte illustriert.

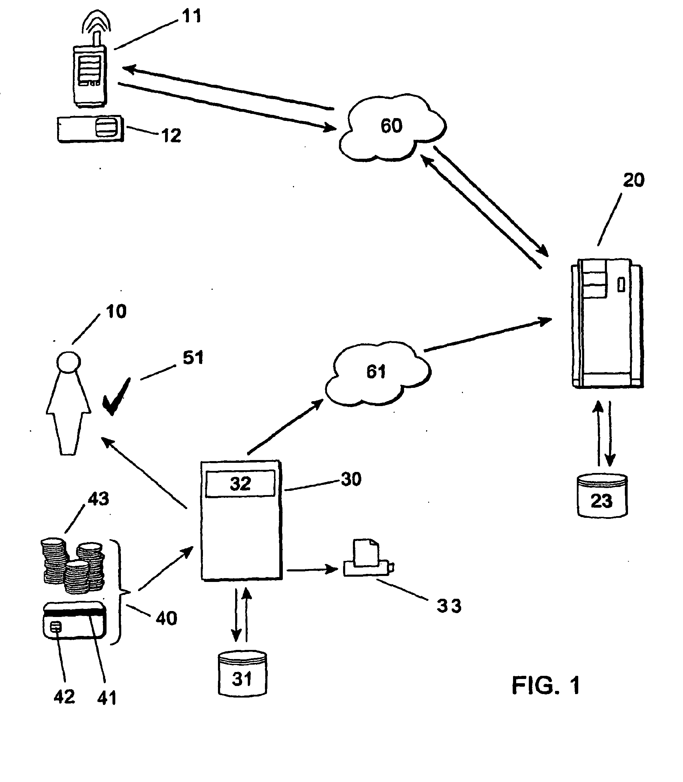

Figur 1 illustriert eine Architektur, die zur Realisierung der Erfindung verwendet werden kann. In diesem Ausführungsbeispiel bezahlt ein Benutzer 10 zum Nach- oder Aufladen einer in einem Mobilfunkgerät 11 eingeführten Chipkarte 12 Geldbetragswerte an einem Bezugsterminal 30. Bei den Chipkarten 12 kann es sich z.B. um SIM-Karten (Subscriber Identification Module) oder Smart-Cards handeln, wobei den Chipkarten jeweils eine Rufnummer zugeordnet ist. Die Zuordnung kann z.B. über ein HLR (Home Location Register) erfolgen, indem im HRL die IMSI (International Mobile Subscriber Identification) einer Rufnummer z.B. einer MSISDN (Mobile Subscriber ISDN) zugeordnet abgespeichert ist. Die Bezahlung erfolgt mittels eines Zahlungsmoduls 32 des Bezugsterminals 30, indem der Benutzer 10 einen Geldbetrag 43 in das Bezugsterminal 30 einwirft und/oder dem Benutzer 10 ein Geldbetrag über eine Kreditkarte 41 belastet wird und/oder dem Benutzer 10 ein Geldbetrag auf einer Chipkarte 42 mit abgespeichertem, vorausbezahltem Geldbetrag (sog. Prepaid-Karten) belastet wird und/oder dem Benutzer 10 ein Geldbetrag auf einem zentral abgespeicherten Konto (z.B. eine Bank- oder Postkonto) belastet wird. Das Belasten auf einer Kreditkarte 41 kann z.B. dadurch geschehen, dass der Benutzer die Kreditkarte 41 in das Terminal einführt und zur Identifikation einen PIN-Code (Personal Identification Number) eingibt oder dass er den Namen, die Kreditkartennummer und eventuell zusätzlich das Verfallsdatum der Kreditkarte eingibt, wie es z.B. beim Warenbezug übers Internet üblich ist. Durch das Einzahlen des Geldbetragswerts erhält der Benutzer 10 im Bezugsterminal 30 ein Guthaben zugeordnet. Die Zuordnung kann z.B. mit einer Timeout-Funktion im Bezugsterminal 30 unterbrochen werden. Der eingezahlte Geldbetragswert wird dem momentanen Benutzer 10 des Bezugsterminals 30 solange zugeordnet, bis der Geldbetragswert in einer Zentraleinheit 20 gutgeschrieben wurde oder bei Inaktivität des Benutzers der Vorgang nach einer vordefinierten Zeiteinheit der Timeout-Funktion unterbrochen wurde. Das Bezugsterminal 30 ist über einen Kommunikationskanal 61 mit der Zentraleinheit 20 verbunden. Das Bezugsterminal 30 kann beispielsweise in einen Fahrscheinautomaten eines öffentlichen Verkehrsbetriebes, in öffentlich zugängliche Terminals einer Telekommunikationsgesellschaft, in eine Automated Teller Machines (ATM) wie Bankomaten oder Point of Sales (POS) Terminals integriert sein. Das Bezugsterminal kann aber auch z.B. eine nur für diesen Zweck vorgesehene öffentlich zugängliche Einheit sein. Der Kommunikationskanal 61 zwischen der Zentraleinheit 20 und dem Bezugsterminal 30 kann z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Internet oder ein anderes Kommunikationsnetz, insbesondere ein Mobilfunknetz umfassen. Durch Übermitteln von Bestellinformationen vom Bezugsterminal 30 an die Zentraleinheit 20 wird einem Identifikationscode (ID) eines Benutzers des Mobilfunknetzes 60 ein Guthaben zugeordnet und in einer Datenbank 23 der Zentraleinheit 20 abgespeichert. Der Datentransfer wird z.B. über ein software- oder hardwaremässig implementiertes Transfermodul des Bezugsterminals 30 eingeleitet und durchgeführt. Die Bestellinformationen umfassen mindestens einen Geldbetragswert und einen Identifikationscode. Der Identifikationscode des Benutzers kann beispielsweise eine MSISDN (Mobile Subscriber ISDN), IMSI (International Mobile Subscriber Identifikation) oder andere IDs (Identification Number) sein. Falls die Rufnummer der Chipkarte nicht gleichzeitig als Identifikationscode verwendet wurde, so existiert eine eindeutige Verknüpfung der Rufnummer mit dem Identifikationscode in der Zentraleinheit 20. Die Übergabe des Identifikationscodes an das Bezugsterminal 30 kann z.B. über Eingabeelemente des Bezugsterminals, über eine drahtlose Schnittstelle eines Mobilfunkgerätes 11 (beispielsweise einer Infrarotschnittstelle (IR)) oder einer anderen Benutzerschnittstelle erfolgen. Bei der Eingabe über ein Mobilfunkgerät 11 z.B. über IR ist auch vorstellbar, dass das Bezugsterminal 30 automatisch die MSISDN der Chipkarte 12 des für die Eingabe benutzten Mobilfunkgerätes 11 als ID übernimmt. Der Benutzer 10, welchem das Guthaben über den Identifikationscode in der Zentraleinheit 20 zugeordnet wird, muss nicht unbedingt identisch mit dem Benutzer 10 des Bezugsterminals 30 sein, sondern kann irgendein Benutzer sein. Z.B können es Eltern sein, die das Guthaben auf der SIM-Karte eines Mobilfunkgeräts, welches einem ihrer Kinder gehört, erhöhen möchten, ohne dass dem Kind z.B Geld zum Kaufen einer Prepaid-Karte gegeben werden muss. Das zugeordnete Guthaben wird von der Zentraleinheit 20 zum Auf- oder Nachladen einer Chipkarte 12 verwendet, indem die Zentraleinheit 20 den Geldbetragswert über das Mobilfunknetz 60 auf die der Rufnummer zugeordnete Chipkarte 12 eines Mobilfunkgeräts 11 überträgt. Die Rufnummer kann gleichzeitig als Identifikationscode des Benutzers 10 verwendet werden und/oder zusätzlich mit den Bestellinformationen übermittelt werden. Die Rufnummer kann aber auch vorgängig in der Zentraleinheit dem Identifikationscode zugeordnet abgespeichert sein. Das Mobilfunknetz 60 kann z.B. ein GSM-, ein UMTS- oder ein anderes Mobilfunknetz 60 sein. Die Kommunikation über das Mobilfunknetz 60 erfolgt beispielsweise mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Applicaton Protokoll) oder UMTS (Universal Mobile Telecommunication System) oder über einen Nutzkanal.

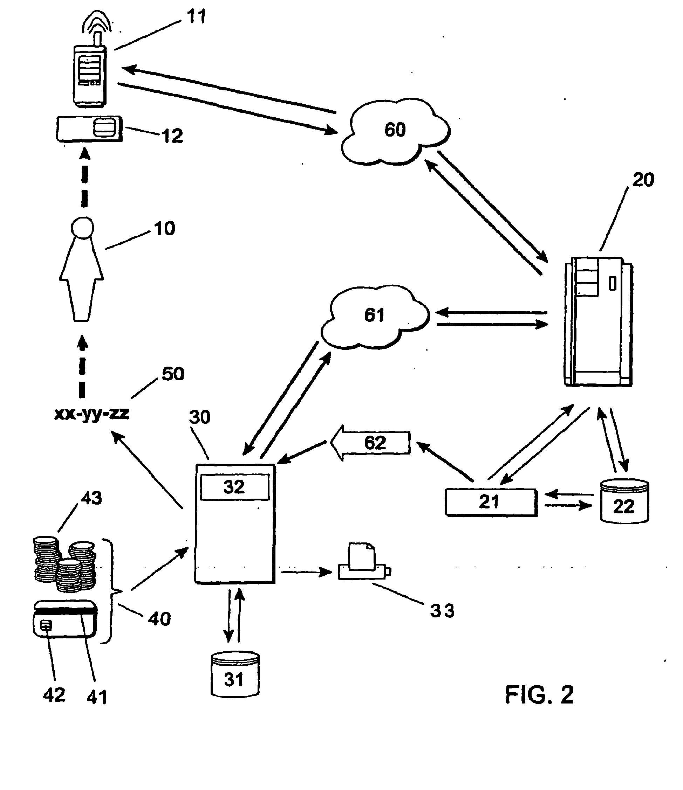

In der Figur 2 bezieht sich das Bezugszeichen 21 auf einen Wertcodeausgeber, der über die notwendige Infrastruktur, einschliesslich Hardware- und Softwarekomponenten sowie gegebenenfalls personelle Ressourcen, verfügt, um im nachfolgend beschriebenen Verfahren die Funktion eines Wertcodeausgebers auszuführen, das heisst, um Bestellungen von Wertcodes entgegenzunehmen, um bestellte Wertcodes an den Besteller auszuliefern, und um gegebenenfalls in der betreffenden Variante des Verfahrens notwendige Bestätigungen entgegenzunehmen. Je nach Ausführungsvariante des erfindungsgemässen Verfahrens werden die Wertcodes zu einem geeigneten Zeitpunkt des Verfahrens generiert und in einer Datenbank 22 des Wertcodeausgebers 21 abgespeichert. Die Wertcodes können von einem Benutzer oder von einem anderen Inhaber, an welchen der Benutzer den Wertcode übertragen hat, eingelöst werden, um Kredit für kostenpflichtige Dienstleistungen zu erhalten, beispielsweise für Telefongespräche, für den Bezug von Gütern, wie beispielsweise Benzin von einer automatisierten Zapfsäule, für die Benützung von öffentlichen Verkehrsmitteln oder zum Bezug von elektronischem Bargeld für die Bezahlung von unterschiedlichsten Gütern und Dienstleitungen.

Figur 2 illustriert eine Architektur, die zur Realisierung der Erfindung verwendet werden kann. Die Bezahlung durch den Benutzer 10 erfolgt auf gleiche Weise wie in vorhergehenden Ausführungsbeispiel. Durch das Einbezahlen des Geldbetragswerts erhält der Benutzer 10 im Bezugsterminal 30 ein Guthaben zugeordnet. Eine Zentraleinheit 30 ist über einen Kommunikationskanal 61/62 mit dem Bezugsterminal 30 verbunden. Das Bezugsterminal 30 kann beispielsweise in einen Fahrscheinautomaten eines öffentlichen Verkehrsbetriebes, in öffentlich zugängliche Terminals einer Telekommunikationsgesellschaft, in eine Automated Teller Machines (ATM) wie Bankomaten oder Point of Sales (POS) Terminals integriert sein. Das Bezugsterminal kann aber auch z.B. eine nur für diesen Zweck vorgesehene öffentlich zugängliche Einheit sein. Der Kommunikationskanal 61 zwischen der Zentraleinheit 20 und dem Bezugsterminal 30 kann z.B. ein Telekommunikationsnetz, beispielsweise ein Festnetz, wie ein LAN (Local Area Network) oder WAN (Wide Area Network), das öffentliche geschaltete Telefonnetz (PSTN, Public Switched Telephone Network und/oder ISDN, Integrated Services Digital Network), das Internet oder ein anderes Kommunikationsnetz, insbesondere ein Mobilfunknetz umfassen. Der Kommunikationskanal 62 kann aber auch über eine andere, nicht netzbasierende Datenübertragung von der Zentraleinheit 20 zum Bezugsterminal 30 erfolgen, wie z.B. ein Batch-Verfahren, mit welchem die Daten des Bezugsterminals 30 über einen Datenträger z.B. in regelmässigen Zeitabständen aktualisiert werden. Der Benutzer 10 wählt die Höhe des zu bestellenden Wertcodes 50 am Bezugsterminal 30. Durch Übermitteln von Bestellinformationen vom Bezugsterminal 30 an einen Wertcodeausgeber 21 wird mindestens ein Wertcode 50 angefordert. Im Falle eines netzbasierenden Kommunikationskanals 61 kann der Datentransfer z.B. über ein software- oder hardwaremässig implementiertes Transfermodul des Bezugsterminals 30 eingeleitet und durchgeführt werden. Die Bestellinformationen umfassen dabei mindestens den Geldbetragswert. Der Wertcodeausgeber 21 umfasst eine Datenbank 22, in welcher von der Zentraleinheit 20 generierte Wertcodes 50 abgespeichert sind. Jeder Wertcode 50 ist mit einem festen Guthaben verknüpft und in der Zentraleinheit 20 abgespeichert. Im Falle, dass ein Batch-Verfahren für den Datentransfer von der Zentraleinheit 20 zum Bezugsterminal 30 benutzt wird, umfasst das Bezugsterminal 30 den Wertcodeausgeber 21. Bei einer netzbasierenden Ausführungsvariante kann z.B. die Zentraleinheit 20 den Wertcodeausgeber 21 umfassen. Der Wertcodeausgeber kann aber auch als eigenständige Einheit ins Netz eingebunden sein. Das Bezugsterminal 30 gibt Wertcodes 50 in der Höhe des Guthabens über ein Ausgabemodul an den Benutzer 10 aus. Die Wertcodes 50 werden von einem Benutzer 10 des Mobilfunknetzes 60 zum Auf- oder Nachladen einer Chipkarte 12 benutzt, indem der Wertcode 50 zusammen mit der Rufnummer des Mobilfunkgerätes 11 z. B. über ein Mobilfunkgerät 11, ein Bezugsterminal 30 oder eine andere Schnittstelle an die Zentraleinheit 20 übermittelt wird. Die Übergabe der Rufnummer an einem Bezugsterminal 30 kann z.B. über Eingabeelemente des Bezugsterminals 30 oder über eine drahtlose Schnittstelle eines Mobilfunkgerätes 11, beispielsweise einer Infrarotschnittstelle (IR) erfolgen. Der Benutzer 10, welcher den Wertcode 50 bezogen hat, muss nicht unbedingt identisch mit dem Benutzer des Mobilfunkgerätes 11 mit der nachzuladenden Chipkarte 12 sein, sondern kann irgendein Benutzer 10 sein, wie das Beispiel mit den Eltern im vorhergehenden Ausführungsbeispiel. Die Übermittlung der Rufnummer durch den Benutzer 10 kann wegfallen, falls die Rufnummer des Mobilfunkgerätes 11 mit der nachzuladenden Chipkarte 12 identisch ist mit der Rufnummer des Mobilfunkgerätes 11, über welches der Wertcode an die Zentraleinheit 20 übermittelt wurde. Um dies zu erreichen, kann z.B. die Rufnummer mit Hilfe von Anschlusserkennung ermittelt werden. Die Zentraleinheit 20 führt das Auf- oder Nachladen durch, indem sie den Geldbetragswert über ein Mobilfunknetz 60 auf die einer Rufnummer zugeordnete Chipkarte 12 eines Mobilfunkgeräts 11 überträgt. Die Zuordnung kann z.B. über ein HLR (Home Location Register) erfolgen, indem die IMSI (International Mobile Subscriber Identification) einer Rufnummer z.B. einer MSISDN (Mobile Subscriber ISDN) zugeordnet abgespeichert ist. Das Mobilfunknetz 60 kann z.B. ein GSM-, ein UMTS- oder ein anderes Mobilfunknetz sein. Die Kommunikation über das Mobilfunknetz 60 erfolgt z.B. mittels speziellen Kurzmeldungen, beispielsweise SMS- (Short Message Services), USSD- (Unstructured Supplementary Services Data) Meldungen oder andere Techniken wie MExE (Mobile Execution Environment), über Protokolle wie GPRS (Generalized Packet Radio Service), WAP (Wireless Applicaton Protokoll) oder UMTS (Universal Mobile Telecommunication System) oder über einen Nutzkanal.

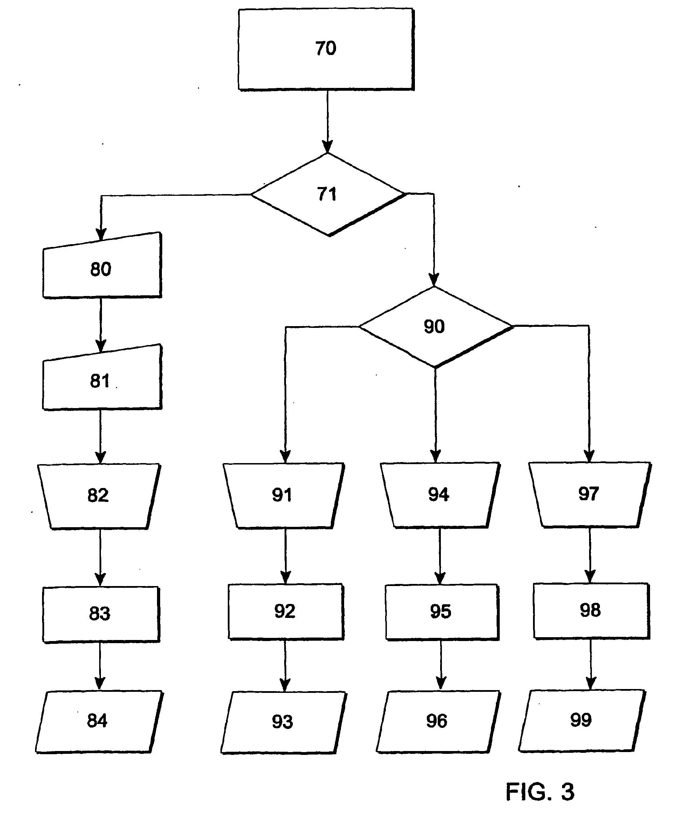

Figur 3 illustriert ein Ausführungsbeispiel einer Eingabeabfolge durch den Benutzer 10 an einem Bezugsterminal 30. In diesem Ausführungsbeispiel wählt der Benutzer 10 in einem ersten Schritt 70 am Bezugsterminal 30 über ein Eingabemenü die Funktion zum Auf- oder Nachladen einer Chipkarte 12 eines Mobilfunkgerätes 11 aus. Im zweiten Schritt 71 kann der Benutzer 10 zwischen dem Auf- oder Nachladen über ein direktes Gutschriftverfahren oder über ein Wertcodeverfahren wählen. Beim direkten Gutschriftverfahren wird der Benutzer 10 aufgefordert, als nächstes eine Rufnummer eines Mobilfunkgerätes 11 (Schritt 80) und den Geldbetrag (Schritt 81) für das Auf- oder Nachladen der Chipkarte einzugeben. Die Bezahlung erfolgt mit Schritt 82, indem der Benutzer 10 den Geldbetrag 43 in das Bezugsterminal 30 einwirft und/oder dem Benutzer ein Geldbetrag über eine Kreditkarte 41 belastet wird und/oder dem Benutzer ein Geldbetrag auf einer Chipkarte 42 mit abgespeichertem, vorausbezahltem Geldbetrag sog. Prepaidkarte belastet wird und/oder dem Benutzer ein Geldbetrag auf einem zentral abgespeicherten Konto (z.B. eine Bank- oder Postkonto) belastet wird. Durch das Einbezahlen des Geldbetragswertes erhält der Benutzer 10 im Bezugsterminal 30 ein Guthaben zugeordnet. Durch Übermitteln (Schritt 83) von Bestellinformationen vom Bezugsterminal 30 an die Zentraleinheit 20 wird der Zahlungsvorgang abgeschlossen, wobei die Bestellinformationen mindestens die Rufnummer und/oder einen anderen Identifikationscode sowie den Geltbetragswert umfasst. Im letzten Schritt 84 erhält der Benutzer 10 vom Bezugsterminal 30 über ein Ausgabemodul eine Bestätigung 51 angezeigt und/oder von einer Druckereinheit 33 ausgedruckt, dass ein Guthaben in der Höhe des Geldbetragwertes von der Zentraleinheit 20 registriert wurde und das Auf- oder Nachladen der Chipkarte 12 ausgeführt wird. Wählt der Benutzer 10 bei Schritt 71 das Wertcodeverfahren, so wird er mit Schritt 90 aufgefordert, einen bestimmten Geldbetragswert eines Wertcodes zu wählen. Die Bezahlung erfolgt mit Schritt 91/94/97 wie in Schritt 82. Durch das Einbezahlen des Geldbetragwertes erhält der Benutzer 10 im Bezugsterminal 30 ein Guthaben zugeordnet. Durch Übermitteln von Bestellinformationen (Schritt 92/95/98) vom Bezugsterminal 30 an einen Wertcodeausgeber 21 wird mindestens ein Wertcode 50 in der Gesamthöhe des Geldbetragswertes angefordert. Im letzten Schritt 93/96/99 erhält der Benutzer 10 vom Bezugsterminal 30 den Wertcode 50 anzeigt und/oder von einer Druckereinheit 33 ausgedruckt.

## Patentansprüche

1. Verfahren zum Auf- oder Nachladen von in Mobilfunkgeräten (11) eingeführten Chipkarten (12) mit einem Guthaben für einen Geldbetragswert unter Benutzung eines Bezugsterminals (30), in welchem Verfahren eine Zentraleinheit (20) das Guthaben über ein Mobilfunknetz (60) auf die einer Rufnummer eines Benutzers des Mobilfunknetzes (60) zugeordnete Chipkarte (12) überträgt, und wobei
ein Benutzer (10) den Geldbetragswert an einem vom Mobilfunkgerät (11) unabhängigen Bezugsterminal (30) bezahlt, und wobei
durch Übermitteln von Bestellinformationen, die mindestens den Geldbetragswert umfassen, vom Bezugsterminal (30) über einen Kommunikationskanal (61) an einen Wertcodeausgeber (21) mindestens ein Wertcode (50) angefordert wird, der von der Zentraleinheit (20) generiert und in einer Datenbank (22) des Wertcodeausgebers (21) abgespeichert wird, und
**dadurch gekennzeichnet,**
**dass** das Bezugsterminal (30) den Wertcode (50) für das Guthaben an den Benutzer (10) ausgibt, wobei dieser ausgegebene Wertcode (50) in der Datenbank (22) des Wertcodeausgebers (21) mit dem Geldbetragswert verknüpft ist und wobei der Wertcode (50) und die Rufnummer zum Auf- oder Nachladen der Chipkarte an die Zentraleinheit übermittelt werden.

2. Verfahren nach Anspruch 1, **dadurch gekennzeichnet, dass** der Benutzer den Geldbetragswert bezahlt, indem er einen Geldbetrag (43) in das Bezugsterminal (30) einwirft und/oder ihm ein Geldbetrag über eine Kreditkarte (41) belastet wird und/oder ihm ein Geldbetrag auf einer Prepaidkarte (42) mit abgespeichertem, vorausbezahltem Geldbetrag belastet wird und/oder ihm ein Geldbetrag auf einem zentral abgespeicherten Konto belastet wird.

3. Verfahren nach Anspruch 1 oder 2, **dadurch gekennzeichnet, dass** die Zentraleinheit (20) mindestens einen Fahrscheinautomaten eines öffentlichen Verkehrsbetriebes als Bezugsterminal (30) benutzt.

4. Verfahren nach einem der Ansprüche 1 bis 3, **dadurch gekennzeichnet, dass** die Zentraleinheit (20) mindestens ein öffentlich zugängliches Terminal einer Telekommunikationsgesellschaft als Bezugsterminal (30) benutzt.

5. Verfahren nach mindestens einem der Ansprüche 1 bis 4, **dadurch gekennzeichnet, dass** der Wertcode (50) auf einer Druckereinheit (33) des Bezugsterminals (30) ausgedruckt wird.

6. System für das Auf- oder Nachladen von in Mobilfunkgeräten (11) eingeführten Chipkarten (12) mit einem Guthaben für einen Geldbetragswert, welches System ein Bezugsterminal (30) zur Erfassung und Speicherung von Geldbetragswerten eines Benutzers (10), eine mit einem Mobilfunknetz (60) verbundene Zentraleinheit (20), einen Wertcodespeicher (22) mit abgespeicherten Wertcodes (50) und/oder eine mit der Zentraleinheit (20) verbundene Datenbank (23) zum Speichern von Guthaben, sowie mindestens ein Mobilfunkgerät (11) mit einer Chipkarte (12), die einer Rufnummer eines Benutzers (10) des Mobilfunknetzes (60) zugeordnet ist, umfasst, und wobei
das Bezugsterminal (30) ein Zahlungsmodul (32) umfasst, mittels welchem der Geldbetragswert bezahlbar ist, und wobei
das System Mittel umfasst, welche durch Übermitteln von Bestellinformation, die Bestellinformationen mindestens den Geldbetragswert umfassen, vom Bezugsterminal (30) an die Zentraleinheit (20) der Rufnummer das Guthaben zuordnen und in der Datenbank (23) der Zentraleinheit (20) abspeichern und welche mindestens einen Wertcode (50) durch Übermitteln von Bestellinformationen vom Bezugsterminal (30) an einen Wertcodeausgeber (21) anfordern,
**dadurch gekennzeichnet,**
**dass** das Bezugsterminal (30) ein Ausgabemodul umfasst, welches dem Benutzer (10) eine Bestätigung anzeigt und/oder ausgibt, dass das Guthaben von der Zentraleinheit (20) registriert und der Rufnummer zugeordnet wurde und dem Benutzer (10) den Wertcode (50) ausgibt, wobei der ausgegebene Wertcode (50) in der Datenbank (22) des Wertcodeausgebers (21) mit dem Geldbetragswert verknüpft ist.

7. System nach Anspruch 6, **dadurch gekennzeichnet, dass** der Geldbetragswert durch den Einwurf eines Geldbetrags in das Zahlungsmodul (32) und/oder durch Belasten eines Geldbetrags über eine Kreditkarte (41) und/oder durch Belasten eines Geldbetrags auf einer Prepaidkarte (42) mit abgespeichertem, vorausbezahltem Geldbetrag und/oder durch Belasten eines Geldbetrags auf einem zentral abgespeicherten Konto des Benutzers (10) bezahlbar ist.

8. System nach Anspruch 6 oder 7, **dadurch gekennzeichnet, dass** mindestens ein Bezugsterminal (30) in einen Fahrscheinautomaten eines öffentlichen Verkehrsbetriebes integriert ist.

9. System nach einem der Ansprüche 6 und 7, **dadurch gekennzeichnet, dass** mindestens ein Bezugsterminal (30) in ein öffentlich zugängliches Terminal einer Telekommunikationsgesellschaft integriert ist.

10. System nach einem der Ansprüche 6 bis 9, **dadurch gekennzeichnet, dass** das Bezugsterminal (30) eine Druckereinheit (33) umfasst, wobei der Wertcode (50) und/oder eine Gutschriftsbestätigung (51) mittels der Druckereinheit (33) ausdruckbar ist.

## Claims

1. Method for loading or reloading chipcards (12) inserted in mobile radio devices (11) with a credit for a monetary amount value using a collection terminal (30), in which method a central unit (20) transmits the credit over a mobile radio network (60) to the chipcard (12) assigned to a call number of a user of the mobile radio network (60), and
a user (10) paying the monetary amount value at a collection terminal (30) independent from the mobile radio device (11),
at least one value code (50) being requested through transmission of order information comprising at least the monetary amount value, from the collection terminal (30) over a communication channel (61) to a value code issuer (21), which value code is generated by the central unit (20) and is stored in a database (22) of the value code issuer (21), and
**characterised in that**
the collection terminal (30) issues the value code (50) for the credit to the user (10), this issued value code (50) being linked in the database (22) of the value code issuer (21) with the monetary amount value and the value code (50) and the call number for loading or reloading the chip card being transmitted to the central unit.

2. Method according to claim 1, **characterised in that** the user pays the monetary amount value **in that** he puts a monetary amount (43) in the collection terminal (30) and/or a monetary amount is debited to him via a credit card (41) and/or a monetary amount is debited to him on a prepaid card (42) with a stored, prepaid monetary amount and/or a monetary amount is debited to him on a centrally stored account.

3. Method according to claim 1 or 2, **characterised in that** the central unit (20) uses at least one ticket machine of a public transport network as the collection terminal (30).

4. Method according to one of the claims 1 to 3, **characterised in that** the central unit (20) uses as collection terminal (30) at least one terminal of a telecommunications company accessible to the public.

5. Method according to at least one of the claims 1 to 4, **characterised in that** the value code (50) is printed on a printer unit (33) of the collection terminal (30).

6. System for loading or reloading chip cards (12) inserted in mobile radio devices (11) with a credit for a monetary amount value, which system comprises a collection terminal (30) for capturing and storing monetary amount values of a user (10), a central unit (20) connected to a mobile radio network (60), a value code memory (22) with stored value codes (50) and/or a database (23) connected to the central unit (20) for storing credits, as well as at least one mobile radio device (11) with a chip card (12), which is assigned to a call number of a user (10) of the mobile radio network (60), and
the collection terminal (30) comprising a payment module (32), by means of which the monetary amount value is payable, and
the system comprising means that, through transmission of order information, the order information comprising at least the monetary amount value, from the collection terminal (30) to the central unit (20), assign the credit to the call number, and store it in the database (23) of the central unit (20), and which request at least one value code (50) through transmission of order information from the collection terminal (30) to a value code issuer (21),
**characterised in that**
the collection terminal (30) comprises a display module which shows to the user (10) and/or gives out a confirmation that the credit was registered by the central unit (20) and was assigned to the call number, and issues to the user (10) the value code (50), the issued value code (50) being linked with the monetary amount value in the database (22) of the value code issuer (21).

7. System according to claim 6, **characterised in that** the monetary amount value is payable by putting a monetary amount into the payment module (32) and/or by debiting a monetary amount via a credit card (41) and/or by debiting a monetary amount on a prepaid card (42) with stored prepaid monetary amount and/or by debiting a monetary amount on a centrally stored account of the user (10).

8. System according to claim 6 or 7, **characterised in that** at least one collection terminal (30) is integrated in a ticket machine of a public transport company.

9. System according to one of the claims 6 and 7, **characterised in that** at least one collection terminal (30) is integrated in a terminal of a telecommunications company accessible to the public.

10. System according to one of the claims 6 to 9, **characterised in that** the collection terminal (30) comprises a printer unit (33), the value code (50) and/or a credit confirmation (51) being printable by means of the printer unit (33).

## Revendications

1. Procédé pour charger ou recharger des cartes à puces (12) dans des appareils de radiotéléphonie mobile (11) avec un crédit correspondant à une somme d'argent en utilisant un terminal d'encaissement (30), procédé dans lequel une unité centrale (20) transmet le crédit par un réseau de radiotéléphonie mobile (60) à la carte à puce (12) associée à un numéro d'appel d'un utilisateur du réseau de radiotéléphonie mobile (60) et
un utilisateur (10) payant la valeur de somme d'argent à un terminal utilisateur (30) indépendant de l'appareil de radiotéléphonie mobile (11) et
par transmission des informations de commande, qui comprennent au moins la valeur de la somme d'argent, un code de valeur (50) étant demandé par le terminal d'encaissement (30) par un canal de communication (61) à un émetteur de code de valeur (21), code qui est généré par l'unité centrale (20) et stocké dans une banque de donnée (22) de l'émetteur de code de valeur (21),
**caractérisé en ce que** le terminal d'encaissement (30) émet le code de valeur (50) pour le crédit à l'utilisateur (10), ce code de valeur émis (50) étant lié dans la banque de données (22) de l'émetteur de code de valeur (21) à la valeur de la somme d'argent et le code de valeur (50) et le numéro d'appel étant transmis à l'unité centrale pour charger ou recharger la carte à puce.

2. Procédé selon la revendication 1, **caractérisé en ce que** l'utilisateur règle la valeur de la somme d'argent dans le fait qu'il introduit une somme d'argent (43) dans le terminal d'encaissement (30) et/ou une somme d'argent lui est débitée sur une carte de crédit (41) et/ou une somme d'argent est débitée sur une carte prépayée (42) d'un montant stocké payé en avance et/ou une somme d'argent est débitée sur un compte stocké centralement.

3. Procédé selon la revendication 1 ou 2, **caractérisé en ce que** l'unité centrale (20) utilise au moins une billetterie automatique d'une entreprise de transport public en tant que terminal d'encaissement (30).

4. Procédé selon l'une des revendications 1 à 3, **caractérisé en ce que** l'unité centrale (20) utilise en tant que terminal d'encaissement (30) au moins un terminal accessible au public d'une entreprise de télécommunication.

5. Procédé selon au moins l'une des revendications 1 à 4, **caractérisé en ce que** le code de valeur (50) est imprimé sur une unité imprimante (32) du terminal d'encaissement (30).

6. Système pour charger ou recharger des cartes à puce (12) introduites dans des appareils de radiotéléphonie mobile (11) avec un crédit correspondant à une somme d'argent, système qui comprend un terminal d'encaissement (30) pour la saisie et le stockage de valeurs de sommes d'argent d'un utilisateur (10), une unité centrale (20) reliée à un réseau de radiotéléphonie mobile (60), une mémoire de code de valeur (22) avec des codes de valeur stockés (50) et/ou une banque de données (23) reliée à l'unité centrale (20) pour le stockage de crédits ainsi qu'au moins un appareil de radiotéléphonie mobile (11) avec une carte à puce (12) qui est associée à un numéro d'appel d'un utilisateur (10) du réseau de radiotéléphonie mobile (60) et
le terminal d'encaissement (30) comportant un module de paiement (32) au moyen duquel peut être réglée la valeur de la somme d'argent et
le système comprenant des moyens qui par transmission d'informations de commande qui comprennent la valeur de la somme d'argent, associent par le terminal d'encaissement (30) à l'unité centrale (20) le numéro d'appel au crédit, et le stockent dans la banque de données (23) de l'unité centrale (20) et qui demandent au moins un code de valeur (50) par transmission d'informations de commande par le terminal d'encaissement (30) à un émetteur de code (21),
**caractérisé en ce que** le terminal d'encaissement (30) comprend un module d'édition qui affiche et/ou édite à l'utilisateur (10) une confirmation que le crédit est enregistré par l'unité centrale (20) et a été associé au numéro d'appel, et émet pour l'utilisateur (10) le code de valeur (50), le code de valeur édité (50) étant relié dans la banque de données (22) de l'émetteur de code de valeur (21) à la valeur de la somme d'argent.

7. Système selon la revendication 6, **caractérisé en ce que** la valeur de la somme d'argent peut être payée par introduction d'une somme d'argent dans le module de paiement (32) et/ou par débit d'une somme d'argent par une carte de crédit (41) et/ou par débit d'une somme d'argent sur une carte prépayée (42) avec une somme d'argent stockée prépayée et/ou par débit d'une somme d'argent sur un compte stocké centralement de l'utilisateur (10).

8. Système selon la revendication 6 ou 7, **caractérisé en ce qu'**un terminal d'encaissement (30) est intégré à une billetterie automatique d'une entreprise de transport public.

9. Système selon l'un des revendications 6 à 7, **caractérisé en ce qu'**au moins un terminal d'encaissement (30) est intégré dans un terminal accessible au public d'une entreprise de télécommunication.

10. Système selon l'un des revendications 6 à 9, **caractérisé en ce que** le terminal d'encaissement (30) comprend une unité d'imprimante (33), le code de valeur (50) et/ou une confirmation de crédit (51) étant imprimables au moyen de l'unité d'imprimante (33).
